# EUROPEAN PATENT SPECIFICATION

(11) **EP 4 080 132 B1**
(45) Date of publication and mention of the grant of the patent: **07.08.2024**
(21) Application number: 20904950.1
(22) Date of filing: 25.12.2020
(51) Int. Cl.: F24H 1/10, F24H 9/00, F24H 1/12, F24H 9/1818, H05B 3/42, F24H 15/174, F24H 15/34, F24H 15/37, F24H 15/219, F24H 9/20, A47J 31/54, B21D 15/10, B21D 53/06, C21D 1/00, H05B 1/02, H05B 3/46, F24H 1/16

(54) **INNER TUBE FOR LIQUID HEATING DEVICE, AND LIQUID HEATING DEVICE AND PRODUCING METHOD THEREFOR**
INNERES ROHR FÜR EINE FLÜSSIGKEITSHEIZVORRICHTUNG, UND FLÜSSIGKEITSHEIZVORRICHTUNG UND PRODUKTIONSVERFAHREN DAFÜR
TUBE INTERNE POUR DISPOSITIF DE CHAUFFAGE DE LIQUIDE, ET DISPOSITIF DE CHAUFFAGE DE LIQUIDE ET PROCÉDÉ DE PRODUCTION ASSOCIÉ

(30) Priority: 26.12.2019 CN 201911365384
(43) Date of publication of application: 26.10.2022
(73) Proprietor: Heating Leader Electronic Technology Co. Ltd, Foshan, Guangdong 528000 (CN)
(72) Inventor: DU, Shaoling, Foshan, Guangdong 528000 (CN)
(74) Representative: Vitina, Maruta
(86) International application number: PCT/CN2020/139249
(87) International publication number: WO 2021/129785

(56) References cited:
- EP-A1- 3 412 986
- WO-A1-2014/205771
- WO-A1-2017/164463
- WO-A1-2017/200362
- CN-A- 108 458 474
- CN-A- 109 458 729
- CN-A- 111 102 735
- CN-A- 111 750 553
- CN-U- 205 481 685
- CN-U- 206 959 313
- CN-U- 209 101 545
- CN-U- 212 339 605
- KR-A- 20190 019 602

## Description

### TECHNICAL FIELD

The present invention relates to the field of thick film heating techniques, and in particular, to an inner pipe for a liquid heating apparatus, and a liquid heating apparatus and a manufacturing method therefor, for example, a heating apparatus for devices such as an instant heating water dispenser and an instant heating coffee machine.

### BACKGROUND

An assembly for continuously heating liquid is generally applied to a heating electric appliance needing to continuously output hot water, such as heating apparatuses in a coffee machine, a beverage heater, and a heating steam engine. Such a heating electric appliance in the prior art generally includes an inner pipe of a liquid flow path and an external heating pipe for heating. An outer wall of the external heating pipe is printed with a thick film circuit, when the thick film circuit is energized to heat, liquid passing through the liquid flow path of the inner pipe is heated.

The liquid flow path of the liquid heating apparatus in the prior art is generally implemented by adding a diversion mechanism on the inner pipe, and the diversion mechanism and the inner pipe are manufactured separately and then fixed to each other. Plastic, rubber, and other materials are generally used. Due to certain elasticity, the plastic and rubber can make a gap between the liquid flow path and the external heat pipe relatively small, so that liquid can only flow from a liquid inlet to a liquid outlet along a flow defined by the liquid flow path, to improve heating performance. However, since during heating, the temperature of the liquid flow path may reach 300°C, the plastic and rubber materials are prone to produce a peculiar smell. A process for producing food-grade rubber is complex and has a high cost, and when the rubber is encountered with water in a high temperature and high pressure environment, due to excessively high temperature, it may age, generate odor, and even produce substances harmful to human health. In addition, long-term high temperature heating easily causes the diversion mechanism to shake and become unstable, resulting in falling off, blocking the flow path, and resulting in a smaller water output or even no water output.

In addition, the liquid flow path is usually sealed by a sealing ring, and the sealing ring is prone to aging, deformation, and loss of sealing effect in the high temperature environment for a long time. Liquid is prone to flow to the heating thick film circuit, and there are safety risks.

KR20190019602 A discloses a dual pipe including: an outer pipe which has a convexo-concave part on an outer peripheral surface thereof, and an inner pipe which has a convexo-concave part on an inner peripheral surface thereof and is inserted into the outer pipe. In the dual pipe, an inner pipe having a spiral groove/ridge on an outer peripheral surface thereof and an outer pipe having a spiral groove/ridge on an inner peripheral surface thereof are screw-coupled to each other. A low pressure refrigerant passes through the interior of the inner pipe. In order to secure a passage of a high pressure refrigerant in a space between the outer peripheral surface of the inner pipe and the outer peripheral surface of the inner pipe, a portion of the spiral groove/ridge formed on the outer peripheral surface of the inner pipe is multiple spiral groove/ridges, and a portion of the spiral groove/ridge formed on an inner peripheral surface of the outer pipe screw-coupled to the spiral groove/ridge formed on the outer peripheral surface of the inner pipe constitutes a single spiral groove/ridge (precisely, the spiral groove/ridges, the number of which is smaller than the number of the threads of the multiple spiral groove/ridges of the inner pipe). That is, the refrigerant of a high pressure flows into a space between the grooves of the spiral groove/ridge, of the multiple spiral groove/ridges formed on the outer peripheral surface of the inner pipe, which is not screw-coupled. Accordingly, the inner pipe and the outer pipe can be firmly fixed through screw-coupling using spiral groove/ridges.

CN1 09458729 A discloses a tubular thick film heater protection device comprising an upper cylinder and a base. The upper cylinder comprises an upper cylinder side surface and a toroidal surface; the outer ring surface of the toroidal surface and the upper portion of the side of the upper cylinder are integrally connected, a flange is formed by downward extending along the inner ring surface of thetoroidal surface, and space between the flange and the inner side wall of the side face of the upper cylinder form a groove; the base is provided with a downwards-concave groove, the base is provided with an elastic electricity connecting piece, and a terminal contact of the elastic electricity connecting piece communicates with an electrode in a contact manner; and the base is provided with a connection terminal, the connection terminal is electrically connected to the elastic electricity connecting piece, and the connection terminal is externally connected with a power supply.

WO2014205771 A1 discloses a thick film heating device, a beverage dispensing device, and a method for heating water. The thick film heating device is suited for being installed into the beverage dispensing device and comprises two concentric tubes arranged one inside the other to form a water flow path in between, wherein a thick film heater is provided to a surface of at least one of the concentric tubes. The device further comprises patterning means for forming a channel pattern within the water flow path, and pressurizing means for pressurizing water flowing into the water flow path to a water pressure of at least 8 bar.

### SUMMARY

To overcome disadvantages of the prior art, objectives of the present invention are to provide an inner pipe for a liquid heating apparatus, and a heating apparatus and a manufacturing method therefor, so that through a combined design of a spiral diversion structure machined and formed on an inner pipe wall in a mode of rolling or pressing, an inner pipe, and an outer pipe with a heating assembly, the high temperature and high pressure resistance performance of the heating apparatus is enhanced, and the safety of the heating liquid is ensured.

The objectives of the present invention are achieved by using the technical solutions according to the appended claims.

Compared with the prior art, the present invention has the following beneficial effects.

The present invention provides an inner pipe for a liquid heating apparatus, and a liquid heating apparatus and a manufacturing method therefor, where an inner pipe made of a metal or alloy material, a spiral diversion structure machined and formed on an inner pipe in a mode of rolling or pressing, and the outer pipe form a stable liquid flow path, the inner pipe is integrally formed with the spiral diversion structure, thereby avoiding the aging, unsafety, ease of falling off, and other problems that are prone to occur in the conventional heating apparatus when the diversion structure is added on the inner pipe wall. It is easy to implement mass production, the production materials are saved, the manufacturing cost is reduced, and the stability performance of the liquid heating apparatus in the high temperature and high pressure environment for a long time is improved.

### BRIEF DESCRIPTION OF DRAWINGS

FIG. 1 is a structural schematic diagram of Embodiment 1 provided by the present invention;
FIG. 2 is a structural schematic diagram of Embodiment 2 provided by the present invention;
FIG. 3 is a structural schematic diagram of Embodiment 3 provided by the present invention;
FIG. 4 is a structural schematic diagram of Embodiment 3 provided by the present invention; and
FIG. 5 is a cross-section of Embodiment 3 provided by the present invention.

In the figures: 10. inner pipe; 11. spiral diversion structure; 12. flow path; 13. expanded port; 14. second through hole; 15. first through hole; 16. liquid outlet pipe; 17. liquid inlet pipe; 18. pipe body; 20. outer pipe; 21. heating assembly; 22. heating circuit; 23. temperature sensor; 24. electrode; 30. end cover; 31. bump; 40. sealing cover; 41. sealing face; 42. liquid outlet; 43. liquid inlet.

### DESCRIPTION OF EMBODIMENTS

The present invention is further described with reference to the accompanying drawings and specific implementations below. It should be noted that, new embodiments can be formed by any combination between the embodiments or between technical features described below provided that no conflict occurs.

In the description of the present invention, it should be understood that, orientations or position relationships indicated by terms such as "center", "longitudinal", "transverse", "up", "down", "front", "rear", "left", "right", "horizontal", "vertical", "top", "bottom", "inner", and "outer" are orientations or position relationships shown based on the accompanying drawings, and are used for only ease of describing the present invention and simplifying the description, rather than indicating or implying that the apparatus or elements must have a particular orientation or be constructed and operated in a particular orientation, and therefore, should not be construed as a limitation on the present invention. In addition, terms "first" and "second" are used merely for description, and shall not be construed as indicating or implying relative importance.

In the description of the present invention, it should be noted that unless otherwise explicitly specified and defined, terms such as "mounted", "connected", and "connection" should be understood in a broad sense, for example, the connection may be a fixed connection, a detachable connection, or an integral connection; or the connection may be a mechanical connection or an electrical connection; or the connection may be a direct connection, an indirect connection through an intermediary, or internal communication between two elements. A person of ordinary skill in the art may understand specific meanings of the foregoing terms in the present invention according to specific situations.

### Embodiment 1

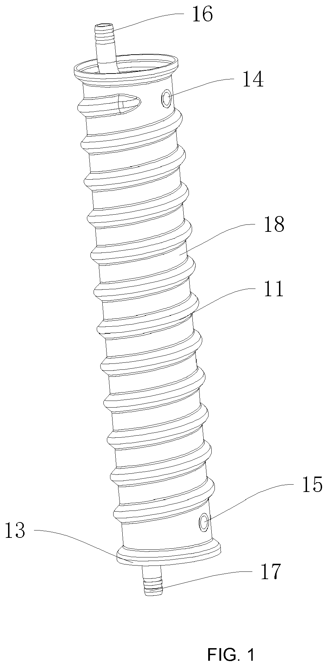

As shown in FIG. 1, the present invention provides an inner pipe 10 for a liquid heating apparatus, specifically including a hollow pipe body 18 made of a metal or an alloy. In a preferable embodiment, the inner pipe 10 is made of a stainless steel material, for example, made of a 304 stainless steel material. The spiral diversion structure 11 is formed by machining at the outer peripheral wall of the inner pipe 10 along the axial direction of the pipe body 18 through a mold or a stainless steel pipe, so as to extend along the axial direction of the pipe body 18 and protrude from the outer peripheral wall of the pipe body 18 to form a spiral protrusion, and therefore, a corresponding position of the surface of the inner peripheral wall of the inner pipe 10 is sunken. Integral forming through the mold avoids the situation that the inner pipe 10 and the diversion structure are separately manufactured and then fixed to each other in the conventional heating apparatus, which is prone to shaking and instability, resulting in falling off, and a change in a sectional area of the flow path 12 affects the liquid inflow or outflow. Volumes needed by the inner pipe 10 and the spiral diversion structure 11 are reduced while it is ensured that a water flow passes through the flow path 12, so as to further reduce the diameter of the outer pipe 20 adaptive to the inner pipe 10, which is adapted to a small liquid heating apparatus. Moreover/alternatively, the inner peripheral wall of the inner pipe 10 has threads with an axial sectional shape of triangle or trapezoid or rectangle or circle. The triangle or trapezoid bottom edge is disposed at the outer peripheral wall of the pipe body 18, and the flow path 12 formed in this way has a simple structure, is easy to generate, and has more stable diversion performance.

In a preferable implementation, the pipe wall thickness of the pipe body 18 is 0.3-1.0 mm; the surface height of the spiral diversion structure 11 is 1-5 mm; the thread spacing of the surface of the inner pipe 10 is 5-20 mm. In this embodiment, the surface height of the spiral diversion structure 11 is 1.8 mm, and the thread spacing is 6 mm. The spiral diversion structure 11 is used in cooperation with the outer pipe 20 sleeved outside the inner pipe 10 in the liquid heating apparatus.

### Embodiment 2

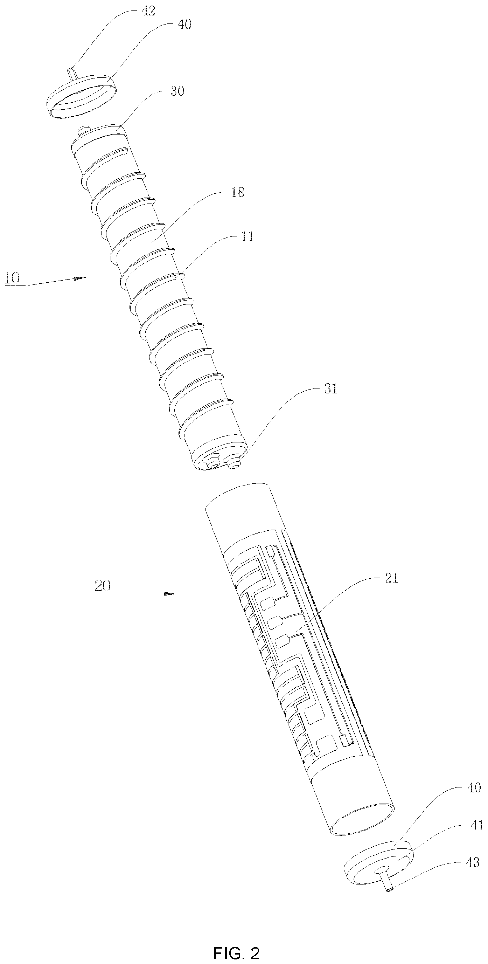

As shown in FIG. 2, the present invention further provides a liquid heating apparatus, which includes the inner pipe 10 in embodiment 1, where two ends of the inner pipe 10 are sealed by end covers 30 made of a metal material, and the outer pipe 20, where an inner peripheral wall of the outer pipe 20 is spaced apart from a highest point of the spiral diversion structure 11 by a predetermined radical clearance, so that the outer pipe 20 is sleeved at an outer part of the spiral diversion structure 11; a heating assembly 21 is disposed on the outer peripheral wall of the outer pipe 20; the inner pipe 10, the outer pipe 20, and the spiral diversion structure 11 form a flow path 12; openings at two ends of the flow path 12 are sealed by sealing covers 40; and the sealing covers 40 are each provided with a liquid inlet 43 or a liquid outlet 42, and liquid enters the flow path 12 through the liquid inlet 43 of the sealing cover 40 for heating and is discharged through the liquid outlet 42.

End covers 30 are sleeved at two ends of the inner pipe 10 respectively; the end covers 30 each include an end cover wall and an end cover face connected to the end cover wall; the end cover wall and the outer peripheral wall sealing of the inner pipe 10 are sealed and fixed by welding. Two ends of the flow path 12 are sealed by the sealing covers 40; the sealing covers 40 each include a sealing wall and a sealing face 41 connected to the sealing wall; the sealing wall and the outer peripheral wall of the outer pipe 20 are sealed and fixed by welding. The sealing face 41 is provided with a liquid inlet 43 and the liquid outlet 42; after the liquid to be heated enters, through the liquid inlet 43, the flow path 12 formed by the spiral division structure 11, the outer peripheral wall of the inner pipe 10, and the inner peripheral wall of the outer pipe 20, the heating assembly 21 integrated at the outer peripheral wall of the outer pipe 20 heats the flowing liquid while the liquid to be heated flows along the flow path 12. After passing through the outer pipe 20, the heat energy generated by the heating assembly 21 exchanges heat energy with the liquid in the flow path 12 to implement continuous heating of the liquid. In addition, the end cover 30 and the sealing cover 40 are used for sealing the inner pipe 10 and the outer pipe 20 respectively; the sealing structures of the inner pipe 10 and the outer pipe 20 are separately and independently processed to facilitate manufacturing; moreover, the sealing effect is good, to improve the stability of the liquid heating apparatus in a high temperature and high pressure environment for a long time. Moreover, the end cover 30, the sealing cover 40, the inner pipe 10, and the outer pipe 20 are all made of a stainless steel material, facilitating the fixedly welding therebetween.

The end cover 30 is provided with a bump 31 for fixing the position of the inner pipe 10, and an orthographic projection of the pump 31 does overlap an orthographic projection of the liquid inlet 43 or the liquid outlet 42. The number of the bumps 31 may be set according to actual conditions. In this embodiment, the number of the bumps 31 is preferably two, the bumps 31 are located at two sides of the liquid inlet 43 or liquid outlet 42 respectively, to ensure uniform stress during mounting. Since the inner pipe 10 needs to be sleeved inside the outer pipe 20 and the sealing cover 40, the height of the bump 31 is less than or equal to the distance between the upper end cover 30 and the upper sealing cover 40 or between the lower end cover 30 and the lower sealing cover 40, to avoid failure of sealing between the sealing cover 40 and the outer pipe 20. The bump 31 may be triangular or trapezoidal or rectangular or semi-elliptical in sectional shape. The bottom of the triangle or the trapezoid or the semi-ellipse is fixed to the surface of the end cover 30, and is not in excessive contact with the sealing cover 40, and does block the regular flowing of the water stream.

The radical clearance between the inner peripheral wall of the outer pipe 20 and the highest point of the spiral diversion structure 11 is in a range of the preset numeral value, to enable the inner pipe 10 to be easily sleeved into the outer pipe 20, and also avoid the problems that because the radical clearance is excessively large, the liquid directly flows to the liquid outlet 42 along the length of the inner pipe 10 through the radical clearance rather than diverting along the flow path 12 of the outer peripheral wall of the inner pipe 10, resulting in local standstill of liquid in the flow path 12, and continuous heating of the heating assembly 21 causes local overheating, so that the standstill liquid at this spot is vaporized to produce and discharge vapor, thereby causing the liquid to be discharged from the liquid outlet 42 discontinuously with a large amount of bubbles. The embodiment provided by the present invention proves, through a large amount of experiments, that when the radical clearance is set in the range of 0.1-0.6 mm, the liquid can be fully heated, the heating effect is good, and it can be further ensured that the liquid flows smoothly while excessive heating of the liquid is avoided, and the generation of large bubbles can be prevented.

### Embodiment 3

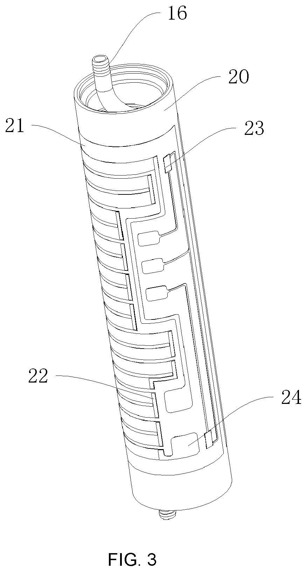

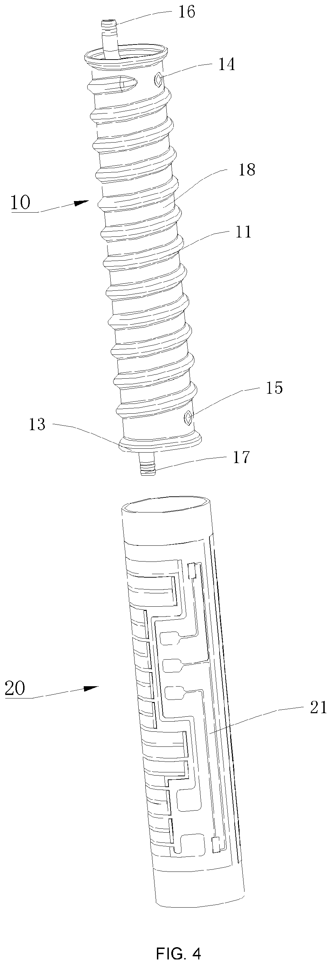

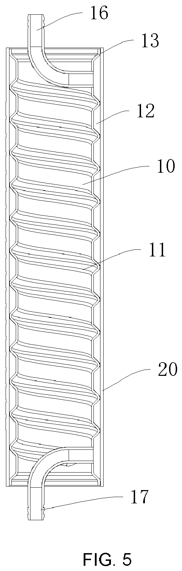

As shown in FIG. 3, FIG. 4, and FIG. 5, the present invention further provides another liquid heating apparatus, which includes the inner pipe 10 and the outer pipe 20 according to Embodiment 1. An inner peripheral wall of the outer pipe 20 is spaced apart from a highest point of the spiral diversion structure 11 by a predetermined radical clearance, so that the outer pipe 20 is sleeved at an outer part of the spiral diversion structure 11; a heating assembly 21 is disposed on the outer peripheral wall of the outer pipe 20; and the inner pipe 10, the outer pipe 20, and the spiral diversion structure 11 form a flow path 12. Different from Embodiment 2, the openings at two ends of the flow path 12 are sealed by the expanded ports 13 disposed at two ends of the pipe body 18.

The openings at the two ends of the inner pipe 10 are each provided with the expanded port 13; the expanded port 13 extends from a direction of the outer peripheral wall of the pipe body 18 away from the opening; and the expanded port 13 and the outer peripheral wall of the pipe body 18 can be integrated by welding or through the mold. In this embodiment, the expanded port 13 and the pipe body 18 are integrated made through the mold; the sealing performance is good and the structure is stable; and after high temperature heating for a long time, the structure does not fall off. The inner pipe 10 is first sleeved into the outer pipe 20; the two ends of the inner pipe 10 and the outer pipe 20 are kept flush, and then the expanded ports 13 at the two ends of the inner pipe 10 are welded and fixed to the inner peripheral wall of the outer pipe 20, to implement the sealing of the flow path 12.

The pipe body 18 and the expanded port 13 are both made of 304 stainless steel, have corrosion resistance, heat resistance, and good mechanical properties; the room temperature machining performance is relatively good, and erosion by a food processing medium can be resisted. The liquid is in directly contact with the inner pipe 10; 304 stainless steel material is not prone to rust and harmless to human body. Under the condition of long-term high temperature and high pressure, the phenomenon of blocking the flow path 12 caused by aging and bubbling of the plastic, rubber, and other materials due to heating is avoided. More importantly, unpleasant odor generated and toxic substances decomposed by long time heating of the plastic and rubber are avoided; and liquid can be rapidly heated, improving the use safety of the heated liquid and the service life of this liquid heating apparatus. The inner pipe 10 for the liquid heating apparatus provided by the present application has a low manufacturing cost, meets food sanitation, and can pass a salt spray test. However, the material is not limited to only the stainless steel materials, and using an aluminum alloy or a titanium alloy materials are also within the scope of protection of the present invention.

On the inner peripheral wall of the pipe body 18, a first through hole 15 penetrating a pipe wall of the pipe body 18 is disposed at a start position of the spiral diversion structure 11, so that the first through hole 15 communicates with the inner peripheral wall and the outer peripheral wall of the pipe body 18, and a flow path 12 inlet is formed at a joint between the first through hole 15 and the inner peripheral wall of the pipe body 18; and a second through hole 14 penetrating the pipe wall of the pipe body 18 is disposed at an end position of the spiral diversion structure 11, so that the second through hole 14 communicates with the inner peripheral wall and the outer peripheral wall of the pipe body 18, and a flow path 12 outlet is formed at a joint between the second through hole 14 and the inner peripheral wall of the pipe body 18.

Since the two ends of the inner pipe 10 and the outer pipe 20 are all sealed by the expanded ports 13, a flow path 12 inlet or flow path 12 outlet needs to be disposed at the inner pipe 10 or outer pipe 20; the liquid inlet pipe 17 and liquid outlet pipe 16 adaptive thereto are disposed at the flow path 12 inlet or flow path 12 outlet. If the flow path 12 inlet or flow path 12 outlet is disposed at the outer peripheral wall of the outer pipe 20, the liquid inlet pipe 17 or the liquid outlet pipe 16 needs to be disposed at an outer surface of this liquid heating apparatus, which increases the volume of this liquid heating apparatus, so that it cannot be directly applied to an existing housing. Hence, in this embodiment, the flow path 12 inlet or flow path 12 outlet is disposed at the start position and end position of the spiral diversion structure 11 to communicate with the inner peripheral wall and outer peripheral wall of the pipe body 18; moreover, a certain distance from the end of the inner pipe 10 exists, so that the liquid may fully fill the flow path 12 for fully heating. The liquid inlet pipe 17 or liquid outlet pipe 16 is located at the inner peripheral wall of the inner pipe 10, extends in a direction from the liquid inlet 43 or liquid outlet 42 towards the openings of the two ends of the inner pipe 10, and is exposed at the openings at the two ends of the inner pipe 10. The liquid inlet pipe 17 or liquid outlet pipe 16 is disposed inside the inner pipe 10, which does not increase the volume of this liquid heating apparatus, and can be directly applied to the existing housing, facilitating machining and manufacturing. Moreover, there is a certain angle between the inlet of the liquid inlet pipe 17 or the outlet of the liquid outlet pipe 16 and the flow path 12 inlet or flow path 12 outlet, avoiding that the liquid cannot fully fill the flow path 12 to cause insufficient heating.

After the liquid to be heated enters the flow path 12 formed by the inner pipe 10, the spiral division structure 11, and the inner peripheral wall of the outer pipe 20 through the liquid inlet pipe 17 and via the first through hole 15, the heating assembly 21 integrated at the outer peripheral wall of the outer pipe 20 heats the flowing liquid while the liquid to be heated flows along the flow path 12. After passing through the outer pipe 20, the heat energy generated by the heating assembly 21 exchanges heat with the liquid in the flow path 12 to implement continuous heating of the liquid. After the liquid fully fills the flow path 12 and heating is completed, the liquid is discharged through the liquid outlet pipe 16 via the second through hole 14.

Preferably, a water pump (not shown in the figure) is disposed at the inlet of the liquid inlet pipe 17 to continuously deliver pressurized liquid into the flow path 12. Moreover, the diameter of the second through hole 14 is smaller than that of the first through hole 15, to keep the liquid pressure in the flow path 12 between the liquid inlet pipe 17 and the liquid outlet pipe 16 at 0.1-1.0 MPa.

Preferably, the heating assembly 21 is disposed at the outer peripheral wall on the outer pipe 20. The heating assembly 21 includes an insulating medium layer disposed on the outer peripheral wall of the outer pipe 20 and a heating circuit 22 disposed at the insulating medium layer; the insulating medium layer is printed and burned on the outer peripheral wall of the outer pipe 20; and the heat energy generated by the heating circuit 22 is used for heat exchange with the liquid flowing in the flow path 12. The heating circuit 22 includes a plurality of heating resistors and electrodes 24 fixed to the insulating medium layer. The extending direction of each heating resistor is consistent with the length direction of the outer pipe 20. Two ends of the heating resistor are respectively and electrically connected to the electrode 24. In this way, a power source is connected at the electrode 24 for the heating resistor to generate heat energy.

The liquid heating apparatus further includes a temperature sensor 23 and a controller electrically connected to the temperature sensor 23 (for example, using a PCB for control in this embodiment). The temperature sensor 23 is configured at the position of the outer pipe 20 adjacent to the liquid outlet 42. As can be seen from the figure that the first through hole 15 in this embodiment is provided in the inner pipe 10; the temperature sensor 23 is adjacent to the second through hole 14 as close as possible, and can be disposed at the axial position of the outer pipe 20 closest to the second through hole 14. The temperature sensor 23 can approximately detect the liquid temperature of the second through hole 14 by detecting the wall temperature of the outer pipe 20 close to the second through hole 14.

The PCB controls the water pump liquid inlet rate and/or the heating power of the heating resistor according to temperature information issued from a first temperature sensor 23. Preferably, the temperature sensor 23 is disposed at the position close to the liquid outlet 42 and away from the heating resistor as far as possible, so as to accurately detect the temperature of the liquid at the liquid outlet 42. In this way, the temperature sensor 23 is configured to detect the outlet liquid temperature and provide a feedback to the PCB. The PCB automatically adjusts the heating power of the heating resistor according to the comparison between the actually measured outlet liquid temperature data and the temperature required by liquid outflow and set by the user, or controls the water pump to adjust the flow rate of the liquid entering the flow path 12, so as to further implement accurate control over the outlet liquid temperature.

To facilitate uniform heating of the liquid in the flow path 12, the plurality of heating resistors are distributed around the outer peripheral wall of the outer pipe 20, and are preferably distributed approximately uniformly, so that the heating resistor faces the liquid in the flow path 12 to transfer heat energy to the flowing liquid in time.

The present invention further provides a method for preparing a liquid heating apparatus, where the method is used to prepare the liquid heating apparatus described above and includes the following steps.

S1: Prepare a mold according to preset parameters of an inner pipe 10, place the mold into a pressure device, and set parameters and debug the device, where the preset parameters include a pipe wall thickness of an inner pipe 10, a height of an expanded port 13, and a height and a spacing and a spiral diversion structure 11; and the inner pipe 10 pipe wall thickness is 0.3-1.0 mm, the surface height of the spiral diversion structure 11 at the outer peripheral wall of the inner pipe 10 is 1-5 mm, and the thread spacing is 5-20 mm.

S2: Place a metal material or a metal alloy material into the mold, and seal and lock the mold; and anneal the metal material or metal alloy material to lower the rigidity of the metal material or the metal alloy material. 304 stainless steel is selected in this embodiment, and has corrosion resistance, heat resistance, and good mechanical properties; moreover, the room temperature machining performance is relatively good, and erosion by food and a processing medium can be resisted.

S3: Start the pressure device, and perform push wave forming by using a highpressure water drum, to complete machining, specifically including: using pressure to pressurize liquid in a limited space of the mold, and deforming the material by water pressure to make the material close to the mold shape, and integrally forming the spiral diversion structure 11 with the pipe body 18.

S4: Release pressure and loosen the mold, and take out the prepared inner pipe 10.

S5: Insert the inner pipe 10 in the outer pipe 20, so that a spacing between a highest point of the inner pipe 10 and the outer pipe 20 is 0.1-0.6 mm; align two ends of the inner pipe 10 and the outer pipe 20, and weld an opening through the expanded port 13 to implement sealing.

This liquid heating apparatus is manufactured by using this method. The inner pipe 10 made of the stainless steel material, the spiral diversion structure 11 is formed at the pipe body 18 by using the inner pipe 10 through water rising of the mold. This avoids the aging, unsafety, ease of falling off from the inner pipe 10, and other problems that are prone to occur when the diversion structure is separately added to the conventional heating apparatus, the manufacturing cost is reduced, machining for many times is not needed, and the cost is low. In addition, the expanded ports 13 are disposed at the openings at the two ends of the inner pipe 10. The inner pipe 10 is welded to the outer pipe 20 through the expanded ports 13, to implement the sealing of the flow path 12. The formed liquid heating apparatus is simple to assemble, has a good sealing effect, and meets mass industrial production, and the stability of the liquid heating apparatus in the high temperature and high pressure environment for a long time is improved.

## Claims

1. An inner pipe (10) for a liquid heating apparatus, comprising a hollow pipe body (18) made of a metal or an alloy, wherein a pipe wall thickness of the pipe body is 0.3-1.0 mm; through a machining method of rolling or pressing, a spiral diversion structure (11) is machined on an inner peripheral wall of the pipe body along an axial direction of the pipe body, so that the spiral diversion structure is formed to extend along the axial direction of the pipe body, protrude on an outer peripheral wall of the pipe body, and be sunken on the inner peripheral wall, wherein
the inner pipe (10) further comprises expanded ports (13) disposed at two ends of the pipe body and integrated with the pipe body,
on the inner peripheral wall of the pipe body, a first through hole (15) penetrating a pipe wall of the pipe body is disposed at a start position of the spiral diversion structure, so that the first through hole communicates with the inner peripheral wall and the outer peripheral wall of the pipe body, and a flow path inlet is formed at a joint between the first through hole and the inner peripheral wall of the pipe body; and a second through hole (14) penetrating the pipe wall of the pipe body is disposed at an end position of the spiral diversion structure, so that the second through hole communicates with the inner peripheral wall and the outer peripheral wall of the pipe body, and a flow path outlet is formed at a joint between the second through hole and the inner peripheral wall of the pipe body.

2. The inner pipe (10) according to claim 1, wherein a surface height of the spiral diversion structure protruding on the outer peripheral wall of the pipe body is 1-5 mm, and a thread spacing is 5-20 mm.

3. A liquid heating apparatus, comprising:
the inner pipe according to claim 1, wherein openings at two ends of the inner pipe are sealed by end covers (30) made of a metal material;
an outer pipe (20), wherein an inner peripheral wall of the outer pipe is spaced apart from a highest point of the spiral diversion structure by a predetermined radical clearance, so that the outer pipe is sleeved at an outer part of the spiral diversion structure; and a heating assembly (21) is disposed on the outer peripheral wall of the outer pipe; wherein
the inner pipe, the outer pipe, and the spiral diversion structure form a flow path; openings at two ends of the flow path are sealed by sealing covers (40); the sealing cover is provided with a liquid outlet (42) or a liquid inlet (43); and liquid enters the flow path through the liquid inlet of the sealing cover for heating and is discharged from the liquid outlet.

4. A liquid heating apparatus, comprising:
the inner pipe according to claim 1 or 2; and
an outer pipe, wherein an inner peripheral wall of the outer pipe is spaced apart from a highest point of the spiral diversion structure by a predetermined radical clearance, so that the outer pipe is sleeved at an outer part of the spiral diversion structure; and a heating assembly is disposed on the outer peripheral wall of the outer pipe; wherein
the inner pipe, the outer pipe, and the spiral diversion structure form a flow path; and openings at two ends of the flow path are sealed by the expanded ports.

5. The liquid heating apparatus according to claim 4, wherein a liquid inlet pipe is disposed at an inlet of the flow path; a liquid outlet pipe is disposed at an outlet of the flow path; and the liquid inlet pipe or the liquid outlet pipe extends towards directions of the openings of two ends of the inner pipe through the first through hole or the second through hole, and is exposed at the openings at the two ends of the inner pipe.

6. The liquid heating apparatus according to claim 5, wherein the expanded port is welded to and sealed with an end of the outer pipe; and the liquid inlet pipe or the liquid outlet pipe is welded to the first through hole or second through hole.

7. The liquid heating apparatus according to claim 3 or 6, comprising a water pump, wherein the liquid inlet pipe is connected to the water pump, and a diameter of the liquid outlet pipe is not greater than a diameter of the liquid inlet pipe, to keep a liquid pressure in the flow path at 0.1-1.0 MPa.

8. The liquid heating apparatus according to claim 6, wherein the inner pipe and the expanded port are both made of a stainless steel material.

9. The liquid heating apparatus according to claim 7, further comprising a temperature sensor (23) and a controller electrically connected to the temperature sensor, wherein the temperature sensor is configured at a place of the outer pipe close to the second through hole, and the controller is configured to control, according to temperature information issued by the temperature sensor, the water pump liquid inlet speed and/or heating power of the heating assembly.

10. A method for preparing a liquid heating apparatus, wherein the method is used to prepare the liquid heating apparatus according to any one of claims 4-9 and comprises the following steps:
S1: preparing a mold according to preset parameters of an inner pipe, and placing the mold into a pressure device; and setting parameters and debugging the device, wherein the preset parameter comprises an inner pipe thickness, a height of an expanded port, and a height and a spacing of a spiral diversion structure;
S2: placing a metal material or a metal alloy material into the mold; sealing and locking the mold; and annealing the metal material or metal alloy material;
S3: starting the pressure device, performing pushing wave forming by using a highpressure water drum, to complete machining, and integrating the spiral diversion structure with a pipe body;
S4: releasing pressure and loosening the mold, and taking out the prepared inner pipe; and
S5: sleeving the inner pipe in an outer pipe, so that a spacing between a highest point of the inner pipe and the outer pipe is 0.1-0.6 mm; aligning two ends of the inner pipe and the outer pipe; and welding an opening to implement sealing.

## Patentansprüche

1. Innenrohr (10) für eine Flüssigkeitsheizvorrichtung, umfassend einen hohlen Rohrkörper (18), der aus einem Metall oder einer Legierung hergestellt ist, wobei eine Rohrwanddicke des Rohrkörpers 0,3-1. 0 mm beträgt; wobei durch ein Bearbeitungsverfahren des Walzens oder Pressens eine spiralförmige Umlenkstruktur (11) an einer inneren Umfangswand des Rohrkörpers entlang einer axialen Richtung des Rohrkörpers bearbeitet wird, so dass die spiralförmige Umlenkstruktur so ausgebildet ist, dass sie sich entlang der axialen Richtung des Rohrkörpers erstreckt, an einer äußeren Umfangswand des Rohrkörpers vorsteht und an der inneren Umfangswand versenkt ist,
wobei:
das Innenrohr (10) außerdem erweiterte Öffnungen (13) aufweist, die an zwei Enden des Rohrkörpers angeordnet und in den Rohrkörper integriert sind,
auf der inneren Umfangswand des Rohrkörpers ein erstes Durchgangsloch (15), das eine Rohrwand des Rohrkörpers durchdringt, an einer Startposition der spiralförmigen Umlenkstruktur angeordnet ist, so dass das erste Durchgangsloch mit der inneren Umfangswand und der äußeren Umfangswand des Rohrkörpers in Verbindung steht, und ein Strömungspfadeinlass an einer Verbindung zwischen dem ersten Durchgangsloch und der inneren Umfangswand des Rohrkörpers ausgebildet ist; und ein zweites Durchgangsloch (14), das die Rohrwand des Rohrkörpers durchdringt, an einer Endposition der spiralförmigen Umlenkstruktur angeordnet ist, so dass das zweite Durchgangsloch mit der inneren Umfangswand und der äußeren Umfangswand des Rohrkörpers in Verbindung steht und ein Strömungspfadauslass an einer Verbindung zwischen dem zweiten Durchgangsloch und der inneren Umfangswand des Rohrkörpers ausgebildet ist.

2. Innenrohr (10) nach Anspruch 1, wobei eine Oberflächenhöhe der spiralförmigen Umlenkstruktur, die an der äußeren Umfangswand des Rohrkörpers vorsteht, 1-5 mm und ein Gewindeabstand 5-20 mm beträgt.

3. Flüssigkeitsheizvorrichtung, umfassend:
Innenrohr nach Anspruch 1, wobei Öffnungen an zwei Enden des Innenrohrs durch Endabdeckungen (30) aus einem Metallmaterial verschlossen sind; und
ein Außenrohr (20), wobei eine innere Umfangswand des Außenrohrs von einem höchsten Punkt der spiralförmigen Umlenkstruktur um einen vorbestimmten radialen Abstand beabstandet ist, so dass das Außenrohr an einem äußeren Teil der spiralförmigen Umlenkstruktur ummantelt ist; und wobei eine Heizanordnung (21) an der äußeren Umfangswand des Außenrohrs angeordnet ist;
wobei das Innenrohr, das Außenrohr und die spiralförmige Umlenkstruktur einen Strömungspfad bilden; Öffnungen an zwei Enden des Strömungspfads durch Dichtungsabdeckungen (40) abgedichtet sind; die Dichtungsabdeckung mit einem Flüssigkeitsauslass (42) oder einem Flüssigkeitseinlass (43) versehen ist; und wobei Flüssigkeit durch den Flüssigkeitseinlass der Dichtungsabdeckung zum Erwärmen in den Strömungspfad eintritt und aus dem Flüssigkeitsauslass abgeleitet wird.

4. Flüssigkeitsheizvorrichtung, umfassend:
das Innenrohr nach Anspruch 1 oder 2; und
ein Außenrohr, wobei eine innere Umfangswand des Außenrohrs von einem höchsten Punkt der spiralförmigen Umlenkstruktur um einen vorbestimmten radialen Abstand beabstandet ist, so dass das Außenrohr an einem äußeren Teil der spiralförmigen Umlenkstruktur ummantelt ist; und wobei eine Heizanordnung an der äußeren Umfangswand des Außenrohrs angeordnet ist;
Wobei das Innenrohr, das Außenrohr und die spiralförmige Umlenkstruktur einen Strömungspfad bilden; Öffnungen an zwei Enden des Strömungspfads durch erweiterte Öffnungen abgedichtet sind.

5. Flüssigkeitsheizvorrichtung nach Anspruch 4, wobei ein Flüssigkeitseinlassrohr an einem Einlass des Strömungspfads angeordnet ist; ein Flüssigkeitsauslassrohr an einem Auslass des Strömungspfads angeordnet ist; und wobei sich das Flüssigkeitseinlassrohr oder das Flüssigkeitsauslassrohr durch das erste Durchgangsloch oder das zweite Durchgangsloch in Richtung der Öffnungen der beiden Enden des Innenrohrs erstreckt und an den Öffnungen an den beiden Enden des Innenrohrs freiliegt.

6. Flüssigkeitsheizvorrichtung nach Anspruch 5, wobei die erweiterte Öffnung mit einem Ende des Außenrohrs verschweißt und abgedichtet ist; und das Flüssigkeitseinlassrohr oder das Flüssigkeitsauslassrohr mit dem ersten Durchgangsloch oder dem zweiten Durchgangsloch verschweißt ist.

7. Flüssigkeitsheizvorrichtung nach Anspruch 3 oder 6, umfassend eine Wasserpumpe, wobei das Flüssigkeitseinlassrohr mit der Wasserpumpe verbunden ist und der Durchmesser des Flüssigkeitsauslassrohrs nicht größer als der Durchmesser des Flüssigkeitseinlassrohrs ist, um den Flüssigkeitsdruck im Strömungspfad auf 0,1-1,0 MPa zu halten.

8. Flüssigkeitsheizvorrichtung nach Anspruch 6, wobei das Innenrohr und die erweiterte Öffnung beide aus einem rostfreien Stahlmaterial bestehen.

9. Flüssigkeitsheizvorrichtung nach Anspruch 7, ferner umfassend einen Temperatursensor (23) und eine Steuerung, die elektrisch mit dem Temperatursensor verbunden ist, wobei der Temperatursensor an einer Stelle des Außenrohrs in der Nähe des zweiten Durchgangslochs angeordnet ist und die Steuerung so konfiguriert ist, dass sie entsprechend der vom Temperatursensor ausgegebenen Temperaturinformation die Flüssigkeitseinlassgeschwindigkeit der Wasserpumpe und/oder die Heizleistung der Heizanordnung steuert.

10. Verfahren zur Herstellung einer Flüssigkeitsheizvorrichtung, wobei das Verfahren zur Herstellung der Flüssigkeitsheizvorrichtung nach einem der Ansprüche 4 bis 9 verwendet wird und die folgenden Schritte umfasst:
S1: Vorbereiten einer Form gemäß den voreingestellten Parametern eines Innenrohrs und Einbringen der Form in einer Druckvorrichtung; und Einstellen von Parametern und Prüfen der Vorrichtung, wobei der voreingestellte Parameter eine Innenrohrdicke, eine Höhe einer erweiterten Öffnung und eine Höhe und einen Abstand einer spiralförmigen Umlenkstruktur umfasst;
S2: Einbringen eines Metallmaterials oder einer Metalllegierung in die Form; Abdichten und Verschließen der Form; und Glühen des Metallmaterials oder der Metalllegierung;
S3: Starten der Druckvorrichtung, Ausführen einer Druckwellenformung unter Verwendung einer Hochdruckwassertrommel, um die Bearbeitung abzuschließen, und Integrieren der spiralförmigen Umlenkstruktur in einen Rohrkörper;
S4: Entlasten des Drucks und Lösen der Form und Entnehmen des vorbereiteten Innenrohrs; und
S5: Ummanteln des Innenrohrs mit einem Außenrohr, so dass der Abstand zwischen dem höchsten Punkt des Innenrohrs und dem Außenrohr 0,1-0,6 mm beträgt; Ausrichten von zwei Enden des Innenrohrs und des Außenrohrs; und Verschweißen einer Öffnung, um eine Abdichtung zu erreichen.

## Revendications

1. Tuyau interne (10) pour un appareil de chauffage de liquide, comprenant un corps de tuyau creux (18) constitué d'un métal ou d'un alliage, dans lequel une épaisseur de paroi de tuyau du corps de tuyau est de 0,3 à 1,0 mm ; grâce à un procédé d'usinage par laminage ou pressage, une structure de dérivation en spirale (11) est usinée sur une paroi périphérique interne du corps de tuyau le long d'une direction axiale du corps de tuyau, de telle sorte que la structure de dérivation en spirale est formée pour s'étendre le long de la direction axiale du corps de tuyau, faire saillie sur une paroi périphérique externe du corps de tuyau, et être enfoncée sur la paroi périphérique interne,
dans lequel,
le tuyau interne (10) comprend en outre des orifices expansés (13) disposés aux deux extrémités du corps de tuyau et intégrés au corps de tuyau,
sur la paroi périphérique interne du corps de tuyau, un premier trou traversant (15) pénétrant dans une paroi de tuyau du corps de tuyau est disposé à une position de départ de la structure de dérivation en spirale, de sorte que le premier trou traversant communique avec la paroi périphérique interne et la paroi périphérique externe du corps de tuyau, et une entrée de trajet d'écoulement est formée au niveau d'un joint entre le premier trou traversant et la paroi périphérique interne du corps de tuyau ; et un deuxième trou traversant (14) pénétrant dans la paroi de tuyau du corps de tuyau est disposé au niveau d'une position d'extrémité de la structure de dérivation en spirale, de sorte que le deuxième trou traversant communique avec la paroi périphérique interne et la paroi périphérique externe du corps de tuyau, et une sortie de trajet d'écoulement est formée au niveau d'un joint entre le deuxième trou traversant et la paroi périphérique interne du corps de tuyau.

2. Tuyau interne (10) selon la revendication 1, dans lequel une hauteur de surface de la structure de dérivation en spirale faisant saillie sur la paroi périphérique externe du corps de tuyau est de 1 à 5 mm, et un espacement de filetage est de 5 à 20 mm.

3. Appareil de chauffage de liquide, comprenant :
le tuyau interne selon la revendication 1, dans lequel les ouvertures aux deux extrémités du tuyau interne sont scellées par des couvercles d'extrémité (30) constitués d'un matériau métallique ;
un tuyau externe (20), dans lequel une paroi périphérique interne du tuyau externe est espacée d'un point le plus élevé de la structure de dérivation en spirale par un jeu radical prédéterminé, de sorte que le tuyau externe est manchonné au niveau d'une partie externe de la structure de dérivation en spirale ; et un ensemble chauffant (21) est disposé sur la paroi périphérique externe du tuyau externe ; dans lequel
le tuyau interne, le tuyau externe et la structure de dérivation en spirale forment un trajet d'écoulement ; les ouvertures aux deux extrémités du trajet d'écoulement sont scellées par des couvercles d'étanchéité (40) ; le couvercle d'étanchéité est pourvu d'une sortie de liquide (42) ou d'une entrée de liquide (43) ; et le liquide entre dans le trajet d'écoulement à travers l'entrée de liquide du couvercle d'étanchéité pour chauffer et est évacué de la sortie de liquide.

4. Appareil de chauffage de liquide, comprenant :
le tuyau interne selon la revendication 1 ou 2 ; et
un tuyau externe, dans lequel une paroi périphérique interne du tuyau externe est espacée d'un point le plus élevé de la structure de dérivation en spirale par un jeu radical prédéterminé, de sorte que le tuyau externe est manchonné au niveau d'une partie externe de la structure de dérivation en spirale ; et un ensemble chauffant est disposé sur la paroi périphérique externe du tuyau externe ; dans lequel
le tuyau interne, le tuyau externe et la structure de dérivation en spirale forment un trajet d'écoulement ; et les ouvertures aux deux extrémités du trajet d'écoulement sont scellées par les orifices expansés.

5. Appareil de chauffage de liquide selon la revendication 4, dans lequel un tuyau d'entrée de liquide est disposé à une entrée du trajet d'écoulement ; un tuyau de sortie de liquide est disposé à une sortie du trajet d'écoulement ; et le tuyau d'entrée de liquide ou le tuyau de sortie de liquide s'étend vers les directions des ouvertures de deux extrémités du tuyau interne à travers le premier trou traversant ou le second trou traversant, et est exposé au niveau des ouvertures au niveau des deux extrémités du tuyau interne.

6. Appareil de chauffage de liquide selon la revendication 5, dans lequel l'orifice expansé est soudé et scellé avec une extrémité du tuyau externe ; et le tuyau d'entrée de liquide ou le tuyau de sortie de liquide est soudé au premier trou traversant ou au deuxième trou traversant.

7. Appareil de chauffage de liquide selon la revendication 3 ou 6, comprenant une pompe à eau, dans lequel le tuyau d'entrée de liquide est connecté à la pompe à eau, et un diamètre du tuyau de sortie de liquide n'est pas supérieur à un diamètre du tuyau d'entrée de liquide, pour maintenir une pression de liquide dans le trajet d'écoulement entre 0,1 et 1,0 MPa.

8. Appareil de chauffage de liquide selon la revendication 6, dans lequel le tuyau interne et l'orifice expansé sont tous deux constitués d'un matériau en acier inoxydable.

9. Appareil de chauffage de liquide selon la revendication 7, comprenant en outre un capteur de température (23) et un contrôleur connecté électriquement au capteur de température, dans lequel le capteur de température est configuré à un endroit du tuyau externe proche du deuxième trou traversant, et le contrôleur est configuré pour contrôler, en fonction des informations de température émises par le capteur de température, la vitesse d'entrée de liquide de la pompe à eau et/ou la puissance de chauffage de l'ensemble chauffant.

10. Procédé de préparation d'un appareil de chauffage de liquide, dans lequel le procédé est utilisé pour préparer l'appareil de chauffage de liquide selon l'une quelconque des revendications 4 à 9 et comprend les étapes suivantes :
S1 : préparer un moule selon des paramètres prédéfinis d'un tuyau interne, et placer le moule dans un dispositif sous pression ; et définir des paramètres et déboguer le dispositif, dans lequel le paramètre prédéfini comprend une épaisseur de tuyau interne, une hauteur d'un orifice expansé, ainsi qu'une hauteur et un espacement d'une structure de dérivation en spirale ;
S2 : placer un matériau métallique ou un matériau en alliage métallique dans le moule ; sceller et verrouiller le moule ; et recuire le matériau métallique ou le matériau en alliage métallique ;
S3 : démarrer le dispositif de pression, effectuer une formation d'onde de poussée à l'aide d'un tambour d'eau à haute pression, terminer l'usinage et intégrer la structure de dérivation en spirale à un corps de tuyau ;
S4 : relâcher la pression et desserrer le moule, et retirer le tuyau interne préparé ; et
S5 : gainer le tuyau interne dans un tuyau externe, de sorte qu'un espacement entre un point le plus élevé du tuyau interne et le tuyau externe soit de 0,1 à 0,6 mm ; aligner deux extrémités du tuyau interne et du tuyau externe ; et souder une ouverture pour réaliser l'étanchéité.
